# EUROPEAN PATENT APPLICATION

(11) **EP 2 757 315 A1**
(43) Date of publication of application: **23.07.2014**
(21) Application number: 14151361.4
(22) Date of filing: 16.01.2014
(51) Int. Cl.: F21V 17/00, F21V 23/00, F21V 29/00, F21S 8/02, F21V 3/04, F21V 7/04, F21V 15/01, F21V 19/04, F21V 23/06, H05K 13/00, F21Y 101/02

(54) **Illumination light source and lighting apparatus**

(30) Priority: 22.01.2013 JP 2013009628
(71) Applicant: Panasonic Corporation, Kadoma-shi Osaka 571-8501 (JP)
(72) Inventor: Mori, Toshio, Osaka, Osaka 540-6207 (JP); Sski, Katsushi, Osaka, Osaka 540-6207 (JP); Tachino, Youji, Osaka, Osaka 540-6207 (JP); Hashimoto, Nozomu, Osaka, Osaka 540-6207 (JP); Kanazawa, Yukiya, Osaka, Osaka 540-6207 (JP)
(74) Representative: Müller-Boré & Partner Patentanwälte PartG mbB

(57) **Abstract**

An LED unit (1) which serves as an illumination light source that is attached to lighting equipment (101) includes: a light-emitting element; a circuit board (70) provided in a drive circuit which drives the light-emitting element; a case (50) inside of which the circuit board (70) is disposed; and a connecting component (53) at least a portion of which is disposed inside the case (50), for electrically connecting the lighting equipment (101) and the drive circuit. The case (50) includes a positioning portion (54) which determines a position of the circuit board (70), and the circuit board (70) includes an opening (71) into which the connecting component (53) is inserted, and which determines the position of the circuit board (70) by way of the rim of the opening (71) abutting the positioning portion (54).

## Description

### Field

The present invention relates to an illumination light source using a light-emitting element such as a light-emitting diode (LED) as a light source and to a lighting apparatus including the illumination light source.

### Background

Conventionally, LED lamps which are disc-shaped or low-profile illumination light sources using LEDs as a light source have been proposed (for example, see Patent Literature (PTL) 1). Generally, such LED lamps include a disk-shaped or low-profile case, and disposed inside the case are a drive circuit which causes an LED to emit light, and a connecting component for electrically connecting the drive circuit to lighting equipment.

### Citation List

### Patent Literature

**[PTL 1]** International Publication No. 2012-005239

### Summary

### Technical Problem

However, with the above-described conventional LED lamp, there is the problem that the circuit board of the drive circuit may rotate inside the case and come into contact with the connecting component, thereby placing a load on the connecting component and damaging the connecting component.

As such, it is possible to prevent the circuit board from rotating inside the case by providing, within the case, a protrusion for positioning the circuit board and providing, in the circuit board, an opening that interfits with the protrusion. However, providing a new opening in the circuit board reduces the effective area of the circuit board for mounting circuit elements (electronic components), and is thus undesirable.

The present invention is conceived in order to solve the aforementioned problem and has as an object to provide an illumination light source and a lighting apparatus which enable a circuit board provided in a drive circuit to be positioned inside a case while retaining the effective area of the circuit board.

### Solution to Problem

In order to achieve the aforementioned object, an illumination light source according to an aspect of the present invention is an illumination light source to be attached to lighting equipment, including: a light-emitting element; a circuit board provided in a drive circuit which drives the light-emitting element; a case inside of which the circuit board is disposed; and a connecting component at least a portion of which is disposed inside the case, for electrically connecting the lighting equipment and the drive circuit, wherein the case includes a positioning portion which determines a position of the circuit board, and the circuit board includes an opening into which the connecting component is inserted, and which determines the position of the circuit board by way of a rim of the opening abutting the positioning portion.

Furthermore, the positioning portion may determine the position of the circuit board by abutting the rim of the opening to restrict rotation about a center axis of the circuit board.

Furthermore, in a state where the connecting component is inserted in the opening, there may be a space around the connecting component in the opening, and the positioning portion may have a width corresponding to the space in the opening.

Furthermore, the positioning portion may be formed projecting from an inner face of the case, and the opening may be a cut-out formed in an outer circumference of the circuit board and determines the position of the circuit board by way of the positioning portion being disposed inside the opening.

Furthermore, the positioning portion has, at both ends, a projection projecting from the inner face of the case, and determines the position of the circuit board by way of the projection abutting the rim of the opening.

Furthermore, an illumination light source according to an aspect of the present invention may further include a cover which covers an opening of the case and is translucent, wherein the positioning portion may determine a position of the cover by abutting the cover.

Furthermore, in order to achieve the aforementioned object, a lighting apparatus according to an aspect of the present invention includes: the above-described illumination light source; and lighting equipment to which the illumination light source is attached, wherein the lighting equipment includes: a main body configured to cover the illumination light source; and a socket attached to the main body, for supplying power to the illumination light source.

### Advantageous Effects

The illumination light source and lighting apparatus according to the present invention enable a circuit board provided in a drive circuit to be positioned inside a case while retaining the effective area of the circuit board.

### Brief Description of Drawings

[FIG. 1A] FIG. 1A is a perspective view of an external appearance of an LED unit according to Embodiment 1 of the present invention.
[FIG. 1B] FIG. 1B is a perspective view of an external appearance of the LED unit according to Embodiment 1 of the present invention.
[FIG. 2] FIG. 2 is a diagram showing a configuration of the LED unit according to Embodiment 1 of the present invention.
[FIG. 3] FIG. 3 is a diagram showing the configuration of the LED unit according to Embodiment 1 of the present invention.
[FIG. 4] FIG. 4 is a perspective view of a configuration of openings formed in a circuit board according to Embodiment 1 of the present invention.
[FIG. 5] FIG. 5 is a perspective view of a configuration of openings of a circuit board, positioning portions of a case, and connecting components according to Embodiment 1 of the present invention.
[FIG. 6] FIG. 6 is a perspective view of a configuration of a translucent cover according to Embodiment 1 of the present invention.
[FIG. 7] FIG. 7 is diagram for describing a translucent cover being positioned by way of a positioning portion of a case according to Embodiment 1 of the present invention.
[FIG. 8] FIG. 8 is a perspective view of a configuration of a case according to Modification 1 of Embodiment 1 of the present invention.
[FIG. 9] FIG. 9 is a perspective view illustrating a state in which a circuit board is disposed inside a case according to Modification 1 of Embodiment 1 of the present invention.
[FIG. 10] FIG. 10 is a perspective view of a configuration of a circuit board according to Modification 2 of Embodiment 1 of the present invention.
[FIG. 11] FIG. 11 is a cross-sectional view of a configuration of a lighting apparatus according to Embodiment 2 of the present invention.

### Description of Embodiment

Hereinafter, LED units (LED lamps), which serve as the illumination light sources, and a lighting apparatus according to exemplary embodiments of the present invention shall be described with reference to the drawings. It should be noted that each of subsequently-described exemplary embodiments shows one specific preferred example of the present invention. The numerical values, shapes, materials, structural components, the arrangement and connection of the structural components, etc. shown in the following exemplary embodiments are mere examples, and are not intended to limit the scope of the present invention. Furthermore, among the structural components in the following exemplary embodiments, components not recited in any one of the independent claims are described as arbitrary structural components included in a more preferable form. Moreover, the respective figures do not necessarily show precise dimensions, etc.

### Embodiment 1

First, an outline configuration of an LED unit 1 according to Embodiment 1 of the present invention shall be described.

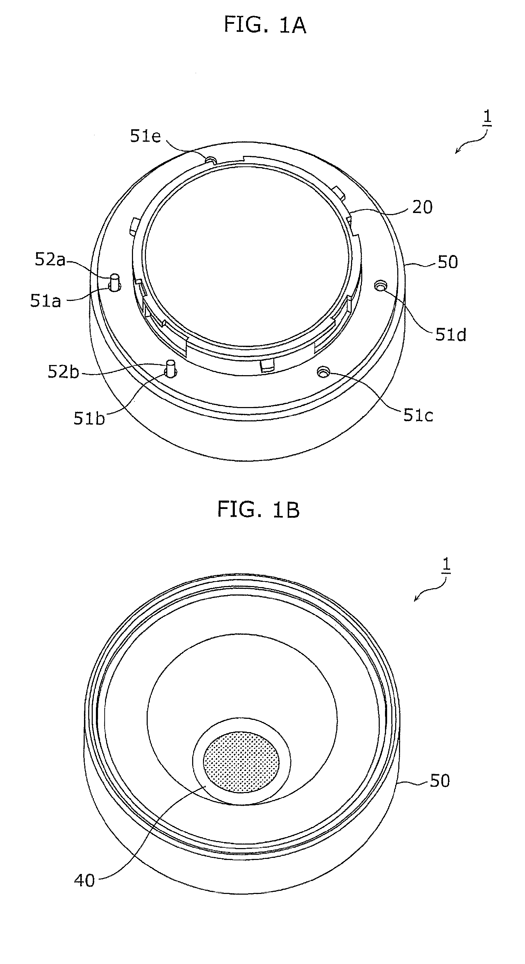

FIG. 1A and FIG. 1B are perspective views of the external appearance of the LED unit 1 according to Embodiment 1 of the present invention. Specifically, FIG. 1A is a perspective view of the LED unit 1 when viewed obliquely from above, and FIG. 1B is a perspective view of the LED unit 1 when viewed obliquely from below. It should be noted that, although an opening of the LED unit 1 is blocked by a cover, the cover is a transparent component and thus the inside of the LED unit 1 can be seen through the cover in FIG. 1B.

Here, in FIG. 1A, the LED unit 1 is illustrated in such a way that the side where light is elicited from the LED unit 1 (hereafter called light-emission side) is the underside, and, in FIG. 1B, the LED unit 1 is illustrated in such a way that the light-emission side is the topside. Hereinafter, description shall be carried out with the light-emission side as the front side (forward), the side opposite the light-emission side as the back side (backward), and a direction crossing the longitudinal (front-back) direction as a sideward direction.

As shown in these figures, the LED unit 1 is an illumination light source having a disk-like or low-profile overall shape. Specifically, the LED unit 1 is an LED lamp having, for example, a GH76p base. More specifically, the LED unit 1 has, for example, an outer diameter of between 50 and 100 mm and a height of between 30 and 50 mm, and when the LED unit 1 is a 20 W LED lamp, the outer diameter is, for example, 90 mm and the height is 45 mm.

Furthermore, the LED unit 1 includes a support 20 that is attached to lighting equipment (not illustrated), a mounting board 40 on which a light-emitting element is provided, and a case 50 that is connected to the support 20.

Furthermore, five through holes 51 (through holes 51a to 51e in the figure) are formed in a circle in the back side face (face on the lighting equipment side) of the case 50. An electrical connection pin 52 for electrically connecting with the lighting equipment is inserted in each through hole 51. It should be noted that, although electrical connection pins 52a and 52b are inserted through the through holes 51a and 51b in the figure, electrical connection pins 52c to 52e (not illustrated) are also inserted through the through holes 51c to 51e, respectively.

Here, for example, the electrical connection pins 52a and 52b are power supply pins, the electrical connection pins 52c and 52d are light adjustment pins, and the electrical connection pin 52e is a grounding pin. It should be noted that, for example, in the case where light adjustment will not be performed, the through holes 51c and 51d are not formed and the electrical connection pins 52c and 52d are not inserted. Furthermore, a through hole 51 into which an electrical connection pin 52 is not inserted may be closed, and the through hole 51 need not be formed.

It should be noted that the electrical connections pin 52 of the LED unit 1 are not limited to being provided at the backside of the case 50. For example, the electrical connection pins 52 may be provided at the side of the case 50. In this case, the size of the outer diameter of a heat-dissipating component is not easily restricted by the electrical connection pins 52, and thus the degree of freedom in the design of the heat-dissipating component is improved.

Furthermore, the electrical connection pins 52 are not limited to a rod shape, and may be of another shape such as plate-like, or the like.

Next, the detailed configuration of the LED unit 1 according to Embodiment 1 of the present invention shall be described.

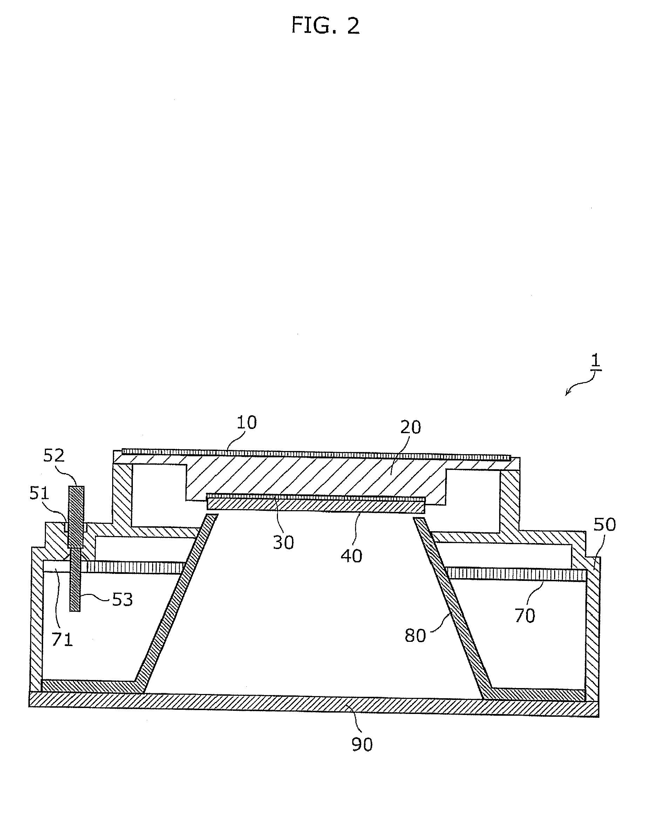

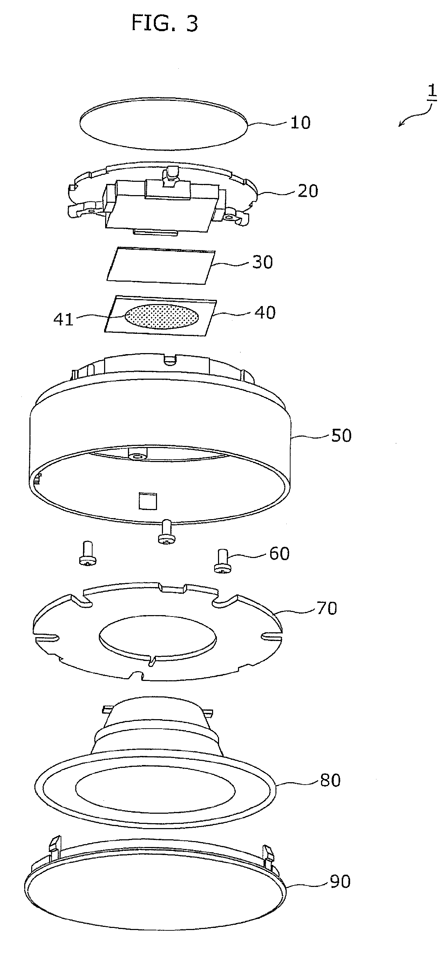

FIG. 2 and FIG. 3 are diagrams showing the configuration of the LED unit 1 according to Embodiment 1 of the present invention. Specifically, FIG. 2 is an outline diagram of the cross-section obtained when the LED unit 1 is cut longitudinally, and FIG. 3 is a diagram showing the respective structural components when the LED unit 1 is disassembled.

As shown in these figures, the LED unit 1 includes a heat-conducting sheet 10, the support 20, a heat-conducting sheet 30, the mounting board 40, the case 50, securing screws 60, a circuit board 70, a reflecting mirror 80, and a translucent cover 90.

The heat-conducting sheet 10 is a heat-conductive sheet disposed on the back face of the support 20, for releasing, to the lighting equipment side, the heat from the mounting board 40 that is transmitted via the support 20. Specifically, the heat-conducting sheet 10 is a sheet made of rubber or resin, and is, for example, a silicon sheet or an acrylic sheet.

The support 20 is a component that is connected to the lighting equipment. Specifically, for example, a GH76p base structure is formed in the back portion of the support 20, and is attached and secured to the lighting equipment. Furthermore, the support 20 is a pedestal on which the mounting board 40 is attached, and is disposed on a side opposite the light-emission-side of the mounting board 40. Furthermore, it is preferable that the support 20 be made of highly heat-conductive material such as aluminum. In other words, the support 20 plays the role of a heat sink which dissipates the heat of the mounting board 40.

The heat-conducting sheet 30 is a heat-conductive sheet that thermally connects the mounting board 40 and the support 20. Specifically, the heat-conducting sheet 30 is a heat-conductive sheet that can efficiently transmit the heat from the mounting board 40 to the support 20, and release the heat to the lighting equipment side. It should be noted that, in the case where the mounting board 40 is a metal board, it is preferable that the heat-conducting sheet 30 be an insulating sheet that provides insulation between the mounting board 40 and the support 20. Specifically, the heat-conducting sheet 30 is a sheet made of rubber or resin, and is, for example, a silicon sheet or an acrylic sheet. Moreover, the heat-conducting sheet 30 may be a liquid component, and so on, such as grease.

The mounting board 40 is disposed inside the case 50 and is a board on which a light-emitting element such as a semiconductor light-emitting element is provided. The mounting board 40 is, for example, configured to be plate-like, and has one face on which the light-emitting element is mounted, and another face that can be thermally connected to the support 20. Furthermore, it is preferable that the mounting board 40 be made of highly heat-conductive material, and is, for example, made of an alumina substrate made of alumina. It should be noted that, aside from an alumina substrate, a ceramic substrate made of other ceramic material such as aluminum nitride, metal substrates made of aluminum, copper, or the like, or a metal-core substrate having a stacked structure of a metal plate and a resin substrate may be used for the mounting board 40.

Specifically, a light-emitting unit 41, which has a light-emitting element that emits light toward the front, is provided in the mounting board 40. The light-emitting unit 41 includes one or plural LED chips (not illustrated) mounted on the mounting board 40, and a sealing component (not illustrated). The LED chips are mounted on one of the faces of the mounting board 40 by die bonding, or the like. It should be noted that, for example, blue LED chips which emit blue light having a central wavelength at between 440 and 470 nm are used as the LED chips. Furthermore, the sealing component is a phosphor-containing resin made of a resin containing phosphor, for protecting the LED chips by sealing the LED chips, as well as for converting the wavelength of the light from the LED chips. As a sealing component, for example, in the case where the LED chips are blue light-emitting LEDs, a phosphor-containing resin in which yttrium, aluminum, and garnet (YAG) series yellow phosphor particles are dispersed in silicone resin can be used to obtain white light. With this, white light is emitted from the light-emitting unit 41 (sealing component) due to the yellow light obtained through the wavelength conversion by the phosphor particles and the blue light from the blue LED chips.

Furthermore, the outer diameter of the light-emitting unit 41 is, for example, between 5 and 50 mm, and when the LED unit 1 is a 20 W LED lamp, the outer diameter of the light-emitting unit 41 is, for example, 20 mm.

It should be noted that although a round light-emitting unit 41 is given as an example in this embodiment, the shape or structure of the light-emitting unit in the present invention is not limited to a round one. For example, a square-shaped light-emitting unit may be used. Furthermore, the arrangement of the LED chips is not particularly limited. For example, the LED chips may be sealed in a line, matrix, or circular form.

The case 50 is a longitudinally-short, low-profile (disc-like), cylindrical case surrounding the light-emission side of the LED unit 1. Specifically, each of the front portion and back portion of the case 50 has an opening. The back portion of the case 50 is secured to the support 20 by way of the securing screws 60, and the translucent cover 90 is attached to the front portion of the case 50. In addition, the heat-conducting sheet 30, the mounting board 40, the circuit board 70, and the reflecting mirror 80 are disposed inside the case 50. The case 50 is configured of a resin case made of a synthetic resin having insulating properties, such as polybutylene terephthalate (PBT).

Furthermore, as shown in FIG. 1A, the case 50 includes the electrical connection pins 52 which are power receiving units that receive power for causing the LED chip mounted on the mounting board 40 to emit light. Specifically, the electrical connection pins 52 for supplying power receive alternating-current (AC) power, and the received AC power is input to the circuit board 70 via a lead wire.

The securing screws 60 are screws for securing the case 50 to the support 20. It should be noted the case 50 and the support 20 are not limited to being secured using screws. For example, the case 50 and the support 20 may have interfitting regions, and the case 50 may be connected to the support 20 through the interfitting of these regions. Alternatively, the case 50 may be joined to the support 20 by using an adhesive.

The circuit board 70 is disposed inside the case 50, and is a circuit board provided in a drive circuit which drives the light-emitting element. Here, the drive circuit is configured of the circuit board 70 and plural circuit elements (electronic components) mounted on the circuit board 70.

Specifically, the circuit board 70 is disposed laterally to the light-emitting unit 41 when the LED unit 1 is viewed from the front (light-emission side), and is a power source circuit board having a circuit element for causing the light-emitting element of the light-emitting unit 41 to emit light. The circuit board 70 is a disk-shaped board in which a circular opening is formed (i.e., donut-shaped board), and is disposed inside the case 50 and outside the reflecting mirror 80. In addition, the circuit element (electronic component) mounted on the circuit board 70 is disposed in the space inside the case 50 and outside the reflecting mirror 80.

In other words, the circuit board 70 is a printed board on which metal lines are formed by patterning, and electrically connects the circuit elements mounted on the circuit board 70 to each other. In this embodiment, the circuit board 70 is disposed such that its principal surface is oriented orthogonally to the lamp axis. The circuit elements are, for example, various types of capacitors, resistor elements, rectifier circuit elements, coil elements, choke coils (choke transistors), noise filters, diodes, or integrated circuit elements, and so on.

Furthermore, since the circuit board 70 is disposed in the back portion of the inside of the case 50, it is preferable that a large-sized circuit element such as, for example, an electrolytic capacitor, choke coil, or the like, be disposed on the front face side of the circuit board 70. It should be noted that although the circuit board 70 is illustrated in this embodiment in a form that is displaced inside the case 50 and outside the reflecting mirror 80, the placement location is not particularly limited and may be arbitrarily designed.

Moreover, with the form in which the circuit board 70 is disposed inside the case 50 and outside the reflecting mirror 80, it is preferable that a large-sized circuit element be disposed on the outer portion of the circuit board 70. This is because, as shown in FIG. 2, when the reflecting mirror 80 has a shape in which the radius widens towards the front, the space formed in the outer portion of the circuit board 70 is larger than the space formed in the inner portion of the circuit board 70.

Specifically, a circuit element (electronic component) for converting the AC power received from the electrical connection pins 52 for supplying power into direct-current (DC) power, and so on, are mounted on the circuit board 70. Specifically, an input unit of the circuit board 70 and an electrical connection pin 52 for supplying power are electrically connected by a lead wire or the like via a connecting component 53 to be described later, and the output unit of the circuit board 70 and the light-emitting unit 41 of the mounting board 40 are electrically connected by a lead wire or the like. The DC power obtained from the conversion by the circuit board 70 is supplied to the light-emitting unit 41 via a power supply terminal.

Furthermore, as shown in FIG. 2, the connecting component 53 is disposed inside an opening 71 formed in the circuit board 70. The connecting part 53 is a rod-like conductive component for electrically connecting the lighting equipment and the drive circuit. In other words, the connecting component 53, by being connected to the electrical connection pin 52, electrically connects the lighting equipment and the circuit elements on the circuit board 70. Furthermore, at least part of the connecting component 53 is disposed inside the case 50. The detailed description of the connecting component 53 and the opening 71 formed in the circuit board 70 shall be provided later.

The reflecting mirror 80 is an optical component which is disposed on the light-emission side of the mounting board 40, and reflects light emitted from the light-emitting unit 41. In other words, the reflecting mirror 80 reflects, forward, the light emitted from the light-emitting element of the light-emitting unit 41 provided in the mounting board 40. Specifically, the reflecting mirror 80 is disposed in front of the light-emitting unit 41 and inside the case 50 so as to surround the light-emitting unit 41, and includes a cylindrical portion which is formed to have an inner diameter that gradually increases from the light-emitting unit 41 toward the front.

Furthermore, the reflecting mirror 80 is made of a white synthetic resin material having insulating properties. Although it is preferable that the material of the reflecting mirror 80 be a polycarbonate, it is not limited to polycarbonate. It should be noted that, in order to improve reflectivity, the inner face of the reflecting mirror 80 may be coated with a reflective film.

The translucent cover 90 is a low-profile, flat disk-shaped cylindrical component having a bottom, which is attached to the front face of the case 50 in order to protect the components disposed inside the case 50. The translucent cover 90 is secured to the front face of the case 50 by adhesive, rivets, screws, or the like. Furthermore, the translucent cover 90 is made of a highly translucent synthetic resin material such as polycarbonate so as to allow transmission of the outgoing light emitted from the light-emitting unit 41 provided in the mounting board 40. Here, the translucent cover 90 is included in the "cover" recited in the Claims.

It should be noted that paint for promoting light-diffusion may be applied to the inner face of the translucent cover 90. Furthermore, phosphor may be included in the translucent cover 90. In this case, the color of the light emitted from the light-emitting unit 41 can be converted by the translucent cover 90.

Furthermore, bumps and indentations (not illustrated) may be formed on the outer face of the translucent cover 90. In this case, when the LED unit 1 is attached to the lighting equipment, the fingers of a worker catch on to the bumps and indentations to allow manipulation of the LED unit 1, and thus facilitate the attachment work.

Next, openings 71 to 75 formed in the circuit board 70, a positioning portion 54 formed in the case 50, and the connecting components 53 shall be described in detail.

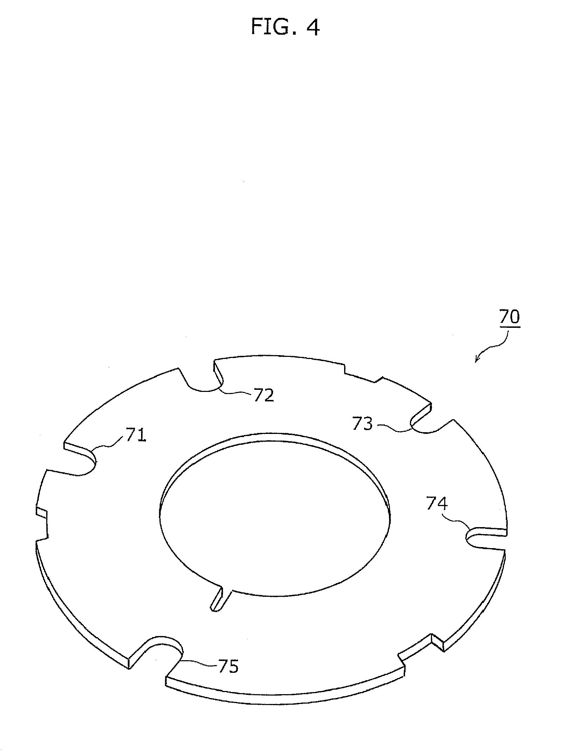

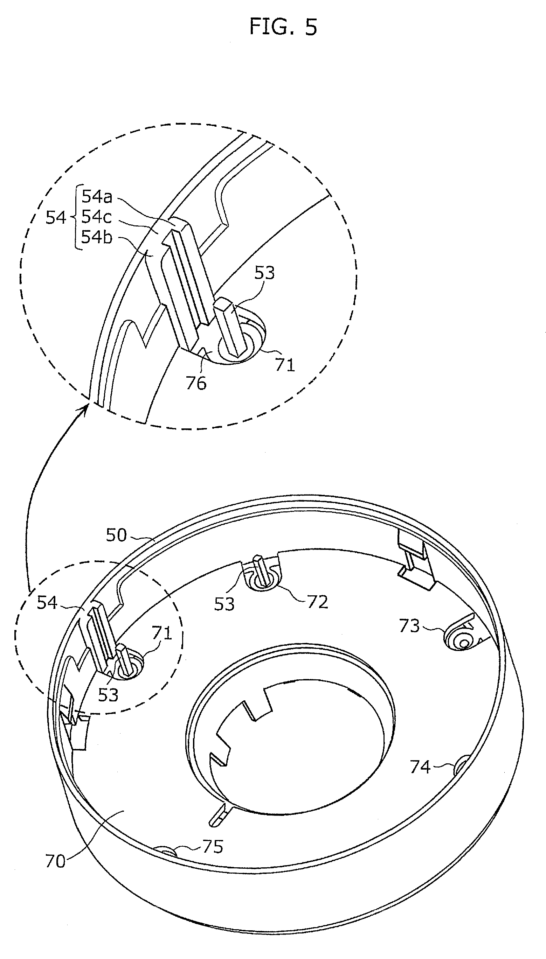

FIG. 4 is a perspective view of a configuration of the openings 71 to 75 formed in the circuit board 70 according to Embodiment 1 of the present invention. FIG. 5 is a perspective view of a configuration of the openings 71 to 75 of the circuit board 70, the positioning portion 54 of the case 50, and the connecting components 53 according to Embodiment 1 of the present invention.

First, as shown in FIG. 4, the openings 71 to 75, which are five cut-outs, are formed in the outer circumference of the circuit board 70. Each of the openings 71 to 75 is an opening into which the connecting part 53 for electrically connecting the lighting equipment and the drive circuit is inserted, and is, specifically, a cut-out having an arc-shaped inward side, formed in the outer circumference of the circuit board 70.

Furthermore, as shown in FIG. 5, the circuit board 70 is disposed inside the case 50 in such a way that the outer circumferential edge of the circuit board 70 fits along the inner face of the case 50. Furthermore, the openings 71 to 75 are disposed so that the connecting components 53 are inserted. It should be noted that although connecting components 53 are inserted in the openings 71 and 72 in FIG. 5, the connecting components 53 may be inserted into any of the openings 71 to 75. As such, hereafter, the shape, and so on, of the opening 71 shall be described, and, since the same applies to the openings 72 to 75 as with the opening 71, their description shall be omitted.

In the state where the connecting component 53 is inserted, the opening 71 is disposed so that there is a space (space 76 shown in the figure) around the connecting component 53. In other words, the opening 71 is an opening that is larger than the cross-section of the connecting component 53, and the connecting component 53 is disposed at a central position in the opening 71. This ensures an insulation distance between the circuit board 70 and the connecting component 53. It should be noted that the shape of the opening 71 may be rectangular on the inward side, in conformance with the cross-sectional shape of the connecting component 53.

Here, the connecting component 53 is a quadrangular prism-like metal component having a back end connected to the electrical connection pin 52 and a front portion disposed inside the case 50. It should be noted that the material for the connecting component 53 is not limited to metal as long as it is a conductive material, and the shape of the connecting component 53 is not limited to that of a quadrangular prism shape and may be a circular cylinder shape. Furthermore, although the connecting component 53 is illustrated as a columnar metal pin in this embodiment, the connecting component 53 may be a connector instead of a metal pin.

Then, by winding the lead wire from the circuit board 70 around the connecting component 53, the connecting component 53 and the circuit elements on the circuit board 70 are electrically connected. With this, the connecting component 53 electrically connects the lighting equipment and the drive circuit, via the electrical connection pin 52.

It should be noted that a connecting component may be configured by integrally forming the connecting component 53 and the electrical connecting pin 52. This makes it possible to reduce the number of components of the LED unit 1 and ensure the reliability of the power supply from the lighting equipment.

Furthermore, the case 50 includes the positioning portion 54 formed projecting from the inner face of the case 50. The positioning portion 54 is a region which determines the position of the circuit board 70. Specifically, the positioning portion 54 is disposed inside the opening 71, and the circuit board 70 is positioned inside the case 50 by way of (the rim of) the opening 71 abutting the positioning portion 54.

More specifically, the positioning portion 54 has a width that corresponds to the space 76 in the opening 71. In addition, the positioning portion 54 includes, at both ends in the width direction, projections 54a and 54b projecting from the inner face of the case 50, and includes a connecting portion 54c which connects the two projections 54a and 54b. In other words, the projections 54a and 54b are the thick portions of the positioning portion 54 and the connecting portion 54c is the thin portion of the positioning portion 54.

The projections 54a and 54b are regions having a rectangular cross-section extending in the longitudinal direction, and determine the position of the circuit board 70 by abutting the rim (inner face/inner circumferential face) of the opening 71. In this manner, the positioning portion 54 determines the position of the circuit board 70 by abutting the rim of the opening 71 to restrict the rotation about the center axis of the circuit board 70.

Next, the positioning of the translucent cover 90 by the positioning portion 54 of the case 50 shall be described.

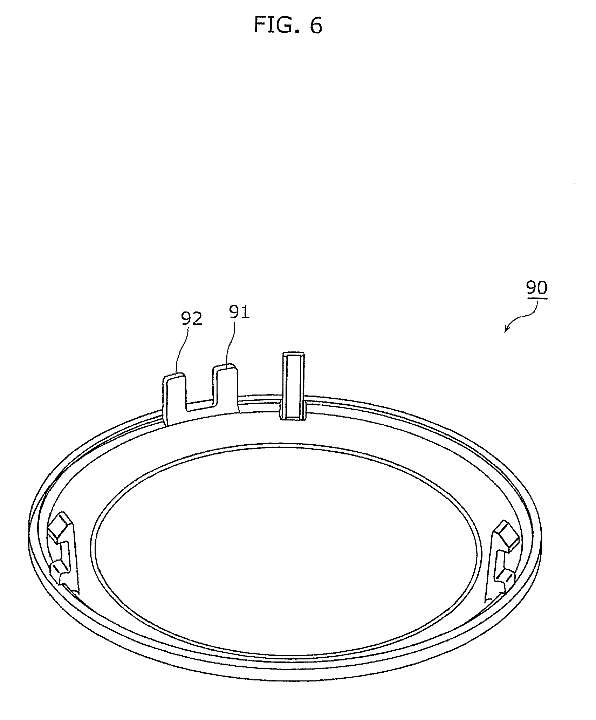

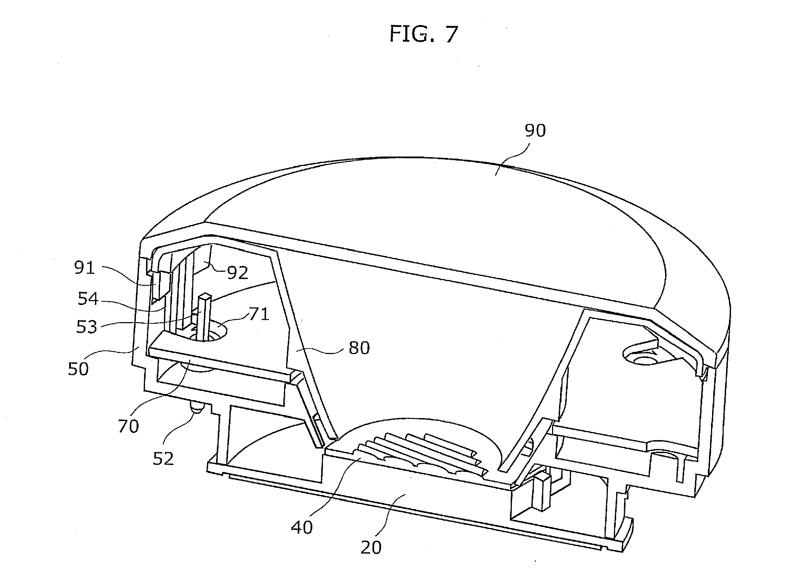

FIG. 6 is a perspective view of the configuration of the light-transmissive cover 90 according to Embodiment 1 of the present invention. FIG. 7 is diagram for describing the translucent cover 90 being positioned by way of the positioning portion 54 of the case 50 according to Embodiment 1 of the present invention. Specifically, the figure is a cross-sectional view of the LED unit 1 which is cut longitudinally in a state where the translucent cover 90 is disposed in the case 50.

As shown in these figures, the translucent cover 90 includes two lateral components 91 and 92 which are disposed at the sides of the positioning portion 54 so as to sandwich both sides of the positioning portion 54. The lateral components 91 and 92 are plate-like components extending in the longitudinal direction. It should be noted that the lateral components 91 and 92 are limited to being plate-like components, and may be columnar components.

Then, by way of the lateral components 91 and 92 abutting the positioning portion 54, the rotation about the center axis of the translucent cover 90 is restricted, and thus the position of the translucent cover 90 is determined. In this manner, the positioning portion 54 determines the position of the circuit board 70 by abutting the rim of the opening 71, and determines the position of the translucent cover 90 by abutting the translucent cover 90.

As described above, according to the LED unit 1 according to Embodiment 1 of the present invention, the opening 71-formed in the circuit board 70 has the connecting component 53 inserted therein and also determines the position of the circuit 70 by way of the rim of the opening 71 abutting the positioning portion 54. In other words, the circuit board 70 can be positioned without providing a new opening for positioning the circuit board 70, by using the opening into which the connecting component 53 is inserted. As such, in the LED unit 1, the position of the circuit board 70 inside the case 50 can be determined while retaining the effective area of the circuit board 70 provided in the drive circuit.

Furthermore, the positioning portion 54 can easily determine the position of the circuit board 70 by abutting the rim of the opening 71 to restrict the rotation about the center axis of the circuit board 70.

Furthermore, in the state where the connecting component 53 is inserted, there is a space around the connecting component 53 in the opening 71, and the positioning portion 54 has a width corresponding to the space in the opening 71. As such, the movement of the circuit board 70 is restricted by the positioning portion 54, thereby making it possible to prevent the circuit board 70 from rotating inside the case 50 and coming into contact with the connecting component 53, and suppress damage to the connecting component 53.

Furthermore, the positioning portion 54 is formed so as to project from the inner face of the case 50; the opening 71 is a cut-out formed in the outer circumference of the circuit board 70 and determines the position of the circuit board 70 by having the positioning portion 54 disposed therein. With this, the circuit board 70 can be positioned easily.

Furthermore, the positioning portion 54 includes, at both ends, the projections 54a and 54b projecting from the inner face of the case 50, and determines the position of the circuit board 70 by way of the projections 54a and 54b abutting the rim of the opening 71. Here, when there is a thick portion in a resin-formed component, there are cases where the resin cools down and contracts in the thick portion and the outer shape becomes deformed. As such, by dividing the positioning portion 54 into thick portions (the projections 54a and 54b) and a thin portion (the connecting portion 54c), contraction of the resin is reduced and deforming of the positioning portion 54 can be suppressed.

Furthermore, the positioning portion 54 also functions as a component for determining the position of the translucent cover 90.

### (Modification 1 of Embodiment 1)

Next, Modification 1 of Embodiment 1 shall be described.

In Embodiment 1, each of the openings 71 to 75 formed in the circuit board 70 is disposed so as to have a space around the connecting component 53. However, in this Modification, a component for filling in the space is disposed around the component 53.

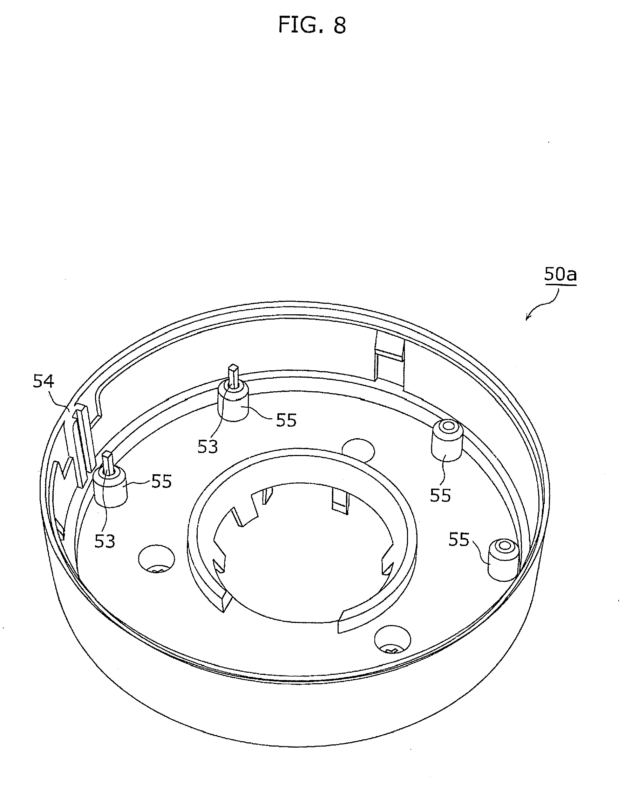

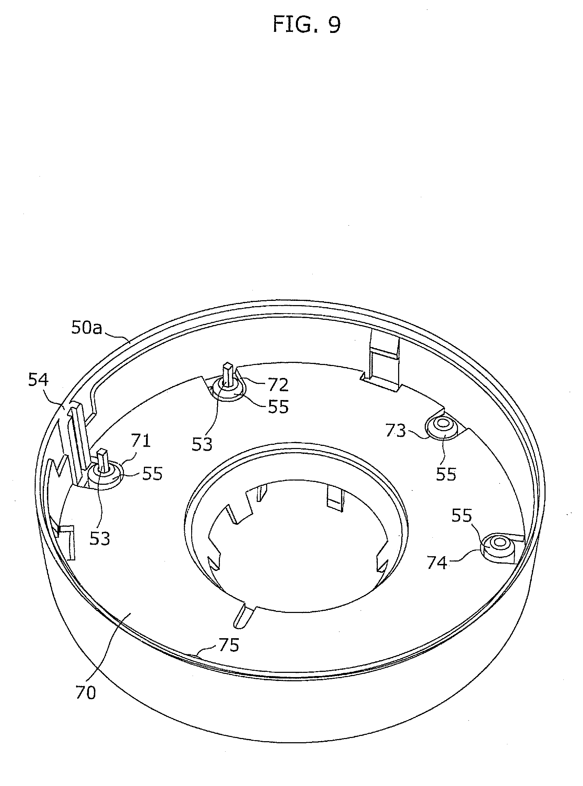

FIG. 8 is a perspective view of a configuration of a case 50a according to Modification 1 of Embodiment 1 of the present invention. FIG. 9 is a perspective view illustrating a state in which the circuit board 70 is disposed inside the case 50a according to Modification 1 of Embodiment 1 of the present invention.

As shown in these figures, the case 50a has five cylindrical protrusions corresponding to the openings 71 to 75 formed in the circuit board 70. In other words each of the protrusions 55 corresponds to the shape of a corresponding one of the openings 71 to 75, and is disposed in the corresponding one of the openings 71 to 75.

Furthermore, a through hole for inserting the connecting component 53 is formed at the center portion of each of the protrusions 55, and by inserting the connecting component 53 into the through hole, the connecting component 53 is secured to the case 50a. It should be noted that although connecting components 53 are inserted in the protrusions 55 corresponding to the openings 71 and 72 in the FIG. 8 and FIG. 9, the connecting components 55 may be inserted into any of the protrusions 55.

It should be noted that other components of the LED unit according to this modification are the same as those in Embodiment 1, and thus detailed description shall be omitted.

As described above, according to the LED unit according to Modification 1 of Embodiment 1 of the present invention, the protrusions 55 are disposed around the connecting component 53 so as to fill the respective spaces between the openings of the circuit board 70 and the connecting components 53. As such, it is possible to ensure the isolation distance between the circuit board 70 and the connecting components 53, and further suppress damage to the connecting components 53 caused by the circuit board 70 coming into contact with the connecting components 53.

### (Modification 2 of Embodiment 1)

Next, Modification 2 of Embodiment 1 shall be described. In Embodiment 1, the openings 71 to 75 formed in the circuit board 70 are openings in the form of cut-outs. However, in this modification, openings formed in the circuit board are through holes.

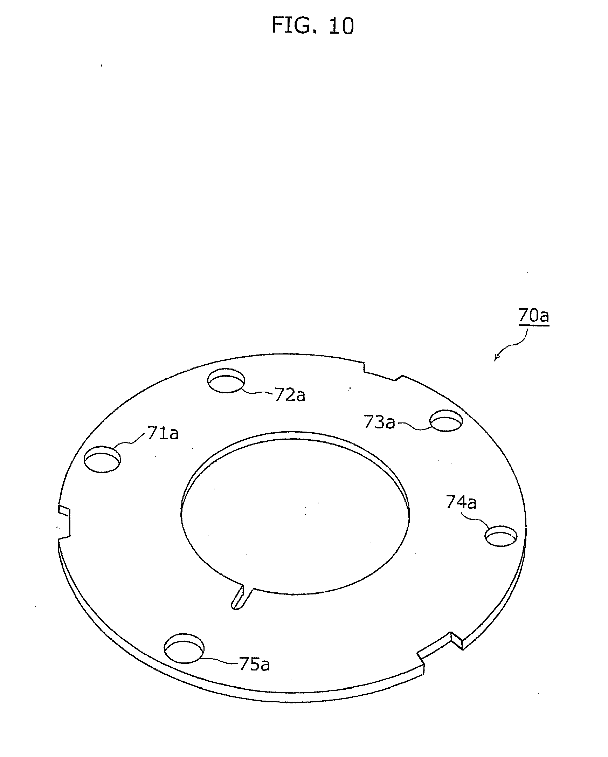

FIG. 10 is a perspective view of a configuration of a circuit board 70a according to Modification 2 of Embodiment 1 of the present invention.

As shown in the figure, instead of the openings 71 to 75 in embodiment 1, five circular through holes 71a to 75a are formed in the circuit board 70a, as openings into which the connecting component 53 is inserted. In addition, by placing a positioning portion projecting from the inner face of the case 50 inside, for example, the through hole 71a among the through holes 71a to 75a, the circuit board 70a is positioned inside the case 50.

As described above, the LED unit according to Modification 1 of Embodiment 1 of the present invention is able to produce the same advantageous effects as in Embodiment 1. It should be noted that the same modification as in Modification 1 may be carried out in this modification.

### Embodiment 2

Next, a lighting apparatus 100 according to Embodiment 2 of the present invention shall be described.

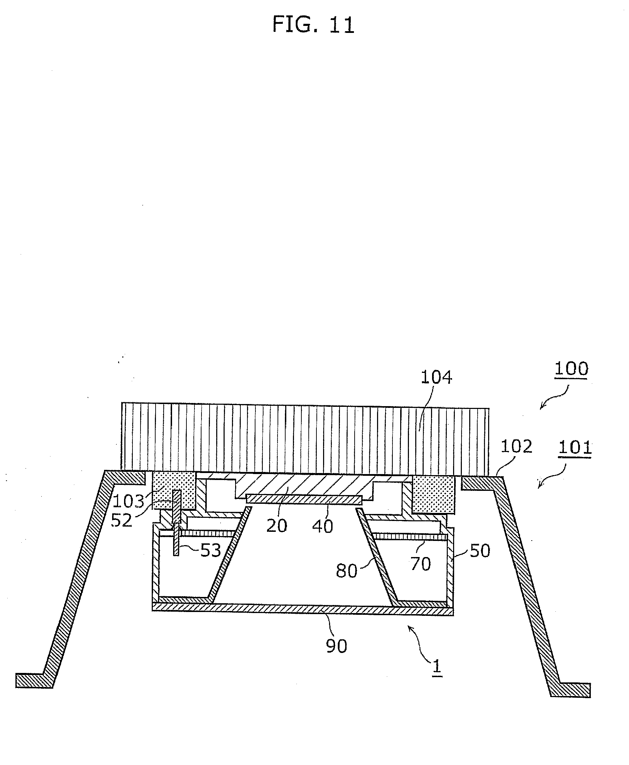

FIG. 11 is a cross-sectional view of a configuration of the lighting apparatus 100 according to Embodiment 2 of the present invention. It should be noted that the lighting apparatus according to this embodiment uses the LED unit 1 according to Embodiment 1. Therefore, in the figure, the same reference signs are given to structural components that are the same as the structural components shown in Embodiment 1.

As shown in the figure, the lighting apparatus 100 is, for example, a downlight and includes lighting equipment 101, and the LED unit 1 according to Embodiment 1. The lighting equipment 101 includes: a main body which includes a reflecting plate 102 and a heat-dissipating component 104 and is configured to cover the LED unit 1; and a socket 103 attached to the main body.

The reflecting plate 102 is substantially in the shape of a cup having a circular opening formed on the top face, and is configured so as to laterally surround the LED unit 1. Specifically, the reflecting plate 102 includes: as the top face, a circular flat plate portion in which a circular opening is formed; and a cylinder portion that is formed to have an inner diameter which gradually widens from the periphery of the flat plate portion to the bottom. The cylinder portion has an opening on the light-emission side, and is configured to reflect the light from the LED unit 1. For example, the reflecting plate 102 is made of a white synthetic resin having insulating properties. It should be noted that, in order to improve reflectivity, the inner face of the reflecting plate 102 may be coated with a reflective film. Moreover, the reflecting plate 102 is not limited to a reflecting plate made of synthetic resin, and a metal reflective plate formed from a pressed metal plate may be used.

The socket 103 is compatible with the GH76p base, and is a disk-shaped component that supplies AC power to the LED unit 1. The socket 103 is arranged so that its upper portion is inserted inside the opening formed in the flat plate portion in the top face of the reflecting plate 102. An opening shaped to conform to the shape of the base of the support 20 is formed at the center of the socket 103, and the top face of the LED unit 1 and the bottom face of the heat-dissipating component 104 are thermally connected by installing the LED unit 1 in such opening. Furthermore, a connection hole into which an electrical connection pin 52 is inserted is formed at a position at the bottom portion of the socket 103 which corresponds to the electrical connection pin 52 of the case 50.

The heat-dissipating component 104 is a component which dissipates the heat transmitted from the LED unit 1. The heat-dissipating component 104 is disposed to abut the top face of the reflecting plate 102 and the top face of the socket 103. It is preferable that the heat-dissipating component 104 be made of highly heat-conductive material such as aluminum.

It should be noted that the LED unit 1 is installed in the socket 103 in a removable manner.

As described above, according to the lighting apparatus 100 according to Embodiment 2 of the present invention, the inclusion of the LED unit 1 according to Embodiment 1 makes it possible to produce the same advantageous effects as in Embodiment 1. It should be noted that the same modification as in the foregoing embodiment and modifications may be carried out in this embodiment.

Although LED units, as illumination light sources, and a lighting apparatus according to the embodiments of the present invention and modifications thereof have been described, the present invention is not limited to the above-described embodiments and modifications thereof.

Specifically, the embodiments and modifications thereof disclosed herein should be considered, in all points, as examples and are thus not limiting. The scope of the present invention is defined not by the foregoing description but by the Claims, and includes all modifications that have equivalent meaning to and/or are within the scope of the Claims. Furthermore, forms obtained by arbitrarily combining the above-described embodiments and modifications are also included in the scope of the present invention. Furthermore, the present invention may be configured by arbitrarily combining partial components in the embodiments and modifications thereof.

For example, although the case is a cylindrical component in the above-described embodiments and modifications, the shape of the case is not limited to such. For example, the case may be configured in a polygonal cylinder-shape such as a quadrangular cylinder, a pentagonal cylinder, a hexagonal cylinder, or an octagonal cylinder, or in a truncated cone-shape.

Furthermore, although the heat-conducting sheet 30, the mounting board 40, the circuit board 70, and the reflecting mirror 80 are disposed inside the case in the above-described embodiments and modifications, each of these components may be entirely or partially disposed outside the case.

Furthermore, optical components such as a lens or reflector for focusing the light from the light-emitting unit 41, or optical filters, and the like, for color tone-adjustment may be used in the above-described embodiments and modification. However, such components are not essential components for the present invention.

Furthermore, although the light-emitting unit 41 has a COB-type configuration in which the LED chip is directly mounted on the mounting board 40, the configuration of the light-emitting unit is not limited to such. For example, it is also acceptable to use a surface mounted device (SMD) light-emitting unit configured by using packaged LED elements, in each of which the LED chip is mounted inside a cavity formed using resin and the inside of the cavity is enclosed by a phosphor-containing resin, and mounting a plurality of the LED elements on a board.

Furthermore, although the light-emitting unit 41 is configured to emit white light by using a blue light-emitting LED and yellow phosphor in the foregoing embodiments and modifications, the present invention is not limited to such configuration. For example, it is possible to emit white light by using a phosphor-containing resin which contains red phosphor and green phosphor, and combining such resin with a blue light-emitting LED.

Furthermore, the light-emitting unit 41 may use an LED which emits light of a color other than blue. For example, when using an ultraviolet light-emitting LED chip as the LED, a combination of respective phosphor particles for emitting light of the three primary colors (red, green, blue) can be used as the phosphor particles. In addition, a wavelength converting material other than phosphor particles may be used, and, as a wavelength converting material, it is possible to use a material including a substance which absorbs light of a certain wavelength and emits light of a wavelength different to that of the absorbed light, such as a semiconductor, a metal complex, an organic dye, or a pigment.

Furthermore, although an LED is given as an example of a light-emitting element in the foregoing embodiments and modifications, semiconductor light-emitting elements such as a semiconductor laser, or light-emitting elements such as organic electro luminescence (EL) elements or non-organic EL elements may be used.

Although the present invention has been described and illustrated in detail, it is clearly understood that the same is by way of example only and is not to be taken by way of limitation, the scope of the present invention being limited only by the terms of the appended claims.

### Industrial Applicability

The illumination light source according to the present invention can be widely used as an LED unit (LED lamp), or the like, that includes, for example, a GH76p base.

### Reference Signs List

- 1: LED unit
- 10: Heat-conducting sheet
- 20: Support pad
- 30: Heat-conducting sheet
- 40: Mounting board
- 41: Light-emitting unit
- 50, 50a: Case
- 51, 51a to 51e: Through hole
- 52, 52a to 52e: Electrical connection pin
- 53: Connecting component
- 54: Positioning portion
- 54a, 54b: Projection
- 54c: Connecting portion
- 55: Protrusion
- 60: Securing screw
- 70, 70a: Circuit board
- 71 to 75: Opening
- 71a to 75a: Through hole
- 76: Space
- 80: Reflecting mirror
- 90: Translucent cover
- 91, 92: Lateral components
- 100: Lighting apparatus
- 101: Lighting equipment
- 102: Reflecting plate
- 103: Socket
- 104: Heat-dissipating component

## Claims

1. An illumination light source to be attached to lighting equipment, the illumination light source comprising:
a light-emitting element;
a circuit board provided in a drive circuit which drives the light-emitting element;
a case inside of which the circuit board is disposed; and
a connecting component at least a portion of which is disposed inside the case, for electrically connecting the lighting equipment and the drive circuit,
wherein the case includes a positioning portion which determines a position of the circuit board, and
the circuit board includes an opening into which the connecting component is inserted, and which determines the position of the circuit board by way of a rim of the opening abutting the positioning portion.

2. The illumination light source according to Claim 1,
wherein the positioning portion determines the position of the circuit board by abutting the rim of the opening to restrict rotation about a center axis of the circuit board.

3. The illumination light source according to one of Claims 1 and 2,
wherein, in a state where the connecting component is inserted in the opening, there is a space around the connecting component in the opening, and
the positioning portion has a width corresponding to the space in the opening.

4. The illumination light source according to any one of Claims 1 to 3,
wherein the positioning portion is formed projecting from an inner face of the case, and
the opening is a cut-out formed in an outer circumference of the circuit board and determines the position of the circuit board by way of the positioning portion being disposed inside the opening.

5. The illumination light source according to Claim 4,
wherein the positioning portion has, at both ends, a projection projecting from the inner face of the case, and determines the position of the circuit board by way of the projection abutting the rim of the opening.

6. The illumination light source according to any one of Claims 1 to 5, further comprising
a cover which covers an opening of the case and is translucent,
wherein the positioning portion determines a position of the cover by abutting the cover.

7. A lighting apparatus comprising:
the illumination light source according to any one of Claims 1 to 6; and
lighting equipment to which the illumination light source is attached,
wherein the lighting equipment includes:
a main body configured to cover the illumination light source; and
a socket attached to the main body, for supplying power to the illumination light source.
